# EUROPÄISCHE PATENTSCHRIFT

(11) **EP 0 852 048 B1**
(45) Veröffentlichungstag und Bekanntmachung des Hinweises auf die Patenterteilung: **08.09.2004**
(21) Anmeldenummer: 97931781.5
(22) Anmeldetag: 04.07.1997
(51) Int. Cl.: G09B 27/02, G02B 26/10, G03B 37/04

(54) **VORRICHTUNG ZUR KUPPELPROJEKTION**
DEVICE FOR PROJECTION ONTO A DOME
DISPOSITIF DE PROJECTION SUR UN DOME

(30) Priorität: 15.07.1996 DE 19628455
(43) Veröffentlichungstag der Anmeldung: 08.07.1998
(73) Patentinhaber: CARL ZEISS JENA GmbH, 07745 Jena (DE); Jenoptik LDT GmbH, 07548 Gera (DE)
(72) Erfinder: LANG, Wilfried, D-07751 Cospeda (DE); MEIER, Ludwig, D-07745 Jena (DE)
(74) Vertreter: Geyer, Werner, Dr.-Ing.
(86) Internationale Anmeldenummer: PCT/EP1997/003553
(87) Internationale Veröffentlichungsnummer: WO 1998/002863

(56) Entgegenhaltungen:
- WO-A-95/01061
- DE-A- 1 622 570
- JP-A- 6 295 159
- US-A- 3 707 786
- US-A- 5 023 725
- US-A- 5 492 475
- US-A- 5 649 827
- "Farbfernseh-Grossprojektion mit Laser" FUNKSCHAU., Nr. 4, 1970, MUNCHEN DE, Seite 96 XP002043543 in der Anmeldung erwähnt
- MEIER LUDWIG: "Der Himmel auf Erden" 1992 , JOHANN AMBROSIUS BARTH , LEIPZIG-HEIDELBERG, DE XP002046084 in der Anmeldung erwähnt siehe Seite 65 - Seite 75

## Beschreibung

Die Erfindung bezieht sich auf eine Vorrichtung zur Kuppelprojektion mit mehreren Projektoren zur Darstellung von Bildinhalten auf einer zumindest teilweise kugelförmig ausgebildeten Projektionsfläche, wobei jeder Projektor so angeordnet ist, daß er mindestens eine Teilfläche der Projektionsfläche mit Teilbildern ausleuchtet und wobei mindestens für einen der Projektoren eine Lichtquelle und eine Ablenkeinrichtung vorgesehen ist, mit dem ein aus der Lichtquelle emittiertes Lichtbündel zur Darstellung des Bildinhaltes über den auszuleuchtenden Teil führbar ist

Eine derartige Vorrichtung ist aus dem Planetarium im "Forum der Technik" in München bekannt. Einer der Projektoren ist dabei ein im Zentrum des halbkugelformigen Raumes befindliche Starball, mit dem Sterne an die Kuppel projiziert werden. Andere Projektoren werden zur Darstellung von Zusatzinformationen, wie beispielsweise Planeten- oder Sternbilder, eingesetzt. Ferner sind auch Projektoren mit Lichtquellen vorgesehen, bei denen das aus einer Lichtquelle austretende Bündel schnell über Teile der Kuppel gelenkt wird. Mit diesen Projektoren werden Vektorgraphiken erzeugt, die insbesondere für Showanwendungen im Planetarium zur Darstellung von Stereobildern eingesetzt werden.

Durch diese Ausstattung eines Planetariums ergibt sich ein ganz neues Medium für Licht- und Tonshows, die schon jetzt im Versuchsstadium mit einfachen Showprogrammen wie beispielsweise "Cosmic Dreams" im Forum der Technik ein großes Publikum anziehen.

Die Abbildung von Bildern mit Lichtbündeln zur farbigen Videodarstellung ist aus der Funkschau 1970, Heft 4, Seite 96, bekannt. Dabei werden zur Darstellung von Farbbildern drei Laserstrahlen unterschiedlicher Wellenlange gebündelt und in einen einzigen Strahl zusammengeführt. Der vereinigte Strahl wird anschließend mittels Spiegeleinrichtungen über einen Schirm zur sequentiellen Beleuchtung von Bildpunkten des darzustellenden Bildes gerastert, so daß ein Bild, ähnlich wie beim Bildschirm einer Fernsehröhre, allerdings mit Lichtbundeln statt Elektronenstrahlen, erzeugt wird.

In dem Buch "Der Himmel auf Erden, die Welt der Planetarien" von Ludwig Meier, Verlag Johann M. Ambrosius Barth, Leipzig-Heidelberg, 1992, S. 71, wird ein Laserplanetarium der Firma Zytel Laser Systems Ltd., Winipeg, beschrieben, das bereits 1972 mit einer derartigen rasternden Technik betrieben wurde. Bei diesem Planetarium wurden Laser mit Hilfe eines Rechners gesteuert. Die Laserstrahlen für jede Farbe wurden dabei durch kleine Spiegel abgelenkt. Weiter war eine Fischaugenoptik vorgesehen, die den durch die Spiegel zugänglichen Winkelbereich aufweitet, so daß die gesamte Planetariumskuppel rasternd überdeckt werden konnte.

Diese ersten Versuche, eine Planetariumskuppel mit rasternden Lichtbündeln zu überdecken, wurde allerdings aufgegeben, da Hochfrequenz im Gigaherzbereich bei der geforderten Auflösung von 75 Millionen Pixeln in der Kuppel und einer 25maligen Überdeckung in einer Sekunde für ein Hellschalten einzelner Sterne nötig ist. Die damit zusammenhängenden technischem Probleme waren unüberwindlich, da man damit an der Grenze der physikalischen Möglichkeiten arbeitete. Man beschränkte sich daher heute bei der Laseranwendung allein auf Vektorgraphiken für Showanwendungen

Für diesen Zweck gibt es Laserprojektoren zur stereoskopischen Darstellung von Vektorgraphiken, wie sie beispielsweise in der DE 41 25 241 A1 angegeben sind. In dieser Druckschrift ist ausgeführt, daß mit Lasern andere Bilddarstellungen, wie beispielsweise für die Darstellung von Videobildern, nicht möglich sind, da diese von einer flächigen Bilddarstellung mit einmaliger Beleuchtung jedes Punktes der Bildfläche pro Bild ausgehen.

Diese Patentanmeldung wurde am 26. Juli 1991 eingereicht, was bedeutet, daß über 20 Jahre kein Fortschritt bezüglich des vorher genannten Stands der Technik aus den 70er Jahren für die rasternde Bilddarstellung in großen Räumen, wie Planetariumskuppeln gemacht wurde.

Gegenwärtig liegt bei der Projektion von Bildern eine wesentliche Schwierigkeit in der Erzeugung einer genügend hohen Leuchtdichte. Bei gleich großem Zuschauerraum ist eine mit einer Projektion zu überdeckende Halbkugelfläche wesentlich größer als beispielsweise eine übliche Kinoleinwand. Deshalb behilft man sich bei der Darstellung eines Bildes in einer Kuppel bei üblichen Projektionsverfahren von Filmen mit der unabhängigen Projektion in einzelnen aneinandergrenzender Bildschirmsegmenten, aus denen ein Gesamtbild zusammengesetzt wird. Trotzdem sind bei derartigen Kinovorführungen die zu verwendenden Filme wegen der hohen Beleuchtungsdichte und der damit verbundenen Wärmebelastung sehr großformatig. Trotz der großen, schwer handhabbaren Filmformate ist bei heute eingesetzten Kuppelprojektoren immer ein hoher Kühlaufwand erforderlich.

Diese Art der Projektion hat deshalb in Planetarien und auch in der Kinotechnik für die Darstellung beispielsweise eines zweistündigen Films bisher keinen Eingang gefunden, abgesehen von Einzelfällen, wie Projektionseinrichtungen bei Volksfesten, in denen nur ein kurzes Filmstück zu einem angemessenen Preis dargeboten wird.

Bei der Kuppelprojektion wirft die Darstellung mittels einer Vielzahl von Teilbildern aus geometrischen Gründen Probleme bei der Aufteilung einer Kugelfläche in mehrere Bildsegmente auf. Eine plane Abbildung läßt sich nicht unverzerrt auf einer gekrümmten Oberfläche darstellen. Außerdem gibt es bei der Projektion von Teilbildern immer Überlappungsbereiche, wenn beispielsweise das projizierte Bild durch gerade Randbereiche begrenzt ist. Diese Probleme kann man dadurch lösen, daß das zu projizierende Bild beispielsweise auf dem Film selbst verzerrt dargestellt wird, um die aufgrund der Geometrie unvermeidbaren geometrischen Verzeichnungen zu kompensieren, wobei der Bildinhalt im Überlappungsbereich abgeschnitten wird.

Man benötigt für diese Technik speziell bearbeitete Filme zur Kuppelprojektion. Dies ist ebenfalls ein großer Kostenfaktor, der die kommerzielle Verwertung von Filmdarstellungen in Kuppeln bisher eingeschränkt hat.

In dem schon angegebenen Buch "Der Himmel auf Erden, die Welt der Planetarien" von Ludwig Meier, ist auf den Seiten 65 bis 67 eine Kuppelprojektion beschrieben, bei der die Kuppel durch Projektion eines einzigen Films mit Inhalt gefüllt wird. Zur Ausleuchtung des teilkugelförmigen Schirms wird eine Fischaugenoptik verwendet. Diese Art der Projektion führt allerdings zu unüberwindbaren Verzeichnungen am Bildrand. Wegen der hohen Wärmebelastung des Films durch 12 000 Watt Bogenlampen muß eine Kühlung des großformatigen 70 mm-Films vorgesehen werden. Außerdem bedeutet die spezielle Herstellung eines Films von 30 Minuten Laufzeit einen Aufwand im Bereich mehrerer Millionen US-Dollar.

Um die Verzerrungen des primären projizierten Bildes kostengünstiger zu gestalten, gibt es Vorschläge für eine Bildaufbereitung mittels Computer, die auf den Seiten 70 ff. dieses Buches näher beschrieben werden. Beispielsweise wird auf den Seiten 71 - 75 ein Planetarium dargestellt, bei dem die Sterne elektronisch gesteuert auf einer Bildröhre dargestellt werden. Man könnte mit einem derartigen System in gleicher Weise auch Kinofilme in eine Kuppel projizieren, jedoch sind die heutigen Rechnerleistungen zur Verzerrung des Bildes, damit diese über die Fischaugenoptik wieder geometriegerecht auf der Kuppel abgebildet werden können, bisher ungenügend. Ferner reicht für große Kuppeln von einigen Metern Durchmessern die Leuchtdichte nicht aus.

Auf den Seiten 70-71 dieses Buches wird, wie schon ausgeführt, diesbezüglich vorgeschlagen, die Bilder ähnlich wie bei dem Beispiel mit der Elektronenstrahlröhre mit Lasern durch Rastern auf dem gekrümmten Schirm darzustellen. Die Versuche in dieser Richtung haben auch zu keinem kommerziellen Erfolg geführt, was auf die geringe verfügbare Laserleistung, die notwendige hohe Schreibgeschwindigkeit auf dem Schirm und die daraus unter Berücksichtigung üblicher Schaltgeschwindigkeiten zur Intensitatssteuerung resultierende schlechte Auflösung zurückzuführen ist.

Für kleinere Teilkugelflächen ist dagegen eine derartige Laservorrichtung aus der US 4 297 723 bekannt, bei der ein Bild auf einem teilkugelflächigen Schirm in drei getrennten Sektoren durch Rastern abgebildet wird. Zur Darstellung des Bildes in den durch drei Teilbilder ausgeleuchteten Bildsegmenten werden drei Lichtbündel mittels eines Spiegelsystems zusammengefaßt, mittels einer Optik auf eine für alle Teilbilder gemeinsame Rastereinrichtung gerichtet, dann durch eine weitere Optik wieder getrennt und anschließend mit einer zusätzlichen Aufweitungsoptik in die einzelnen Bildsegmente auf den Schirm abgelenkt. Die zusätzliche Aufweitungsoptik besteht wieder aus Spiegeln in einer Anordnung, die es ausschließlich erlaubt, maximal 3 Teilflächen mit dem gewünschten Bildinhalt zu füllen. Das reicht für eine vollständige Überdeckung einer Planetariumskuppel nicht aus.

Andere Projektionen im Planetarium erfolgen durch Spezialprojektoren auf der Basis des Diaprinzips. Insbesondere seien dafür die bekannten, in Planetarien eingesetzte Planetenprojektoren genannt. Bei diesen Projektoren bedarf es zur Darstellung verschiedener Planetenbewegungen oder zur Demonstration von Mondphasen spezieller Mechanismen. Je natürlicher die Darstellung von Himmelserscheinungen sein soll, desto aufwendiger werden die einzusetzende Mechanismen. Beispielsweise benötigt man zur Darstellung der scheinbaren Vergrößerung des Mondes am Horizont eine zusätzliche Zoomoptik. Ferner werden Mechanismen zur automatischen Steuerung der Fokussierung bei unterschiedliche Entfernung des Objektivs zur Kuppel während der bahngesteuerten Bewegung von Planetenbildern benötigt.

Die US 5 023 725 A offenbarrt die Merkmale des Oberbegriffs von Ansprüch 1.

Die Beispiele zeigen, daß derartige Projektoren sehr aufwendig sind und dafür Projektoren mit programmierbarem Bildinhalt erwünscht wären. Beim gegenwärtigen, durch die genannten Elektronenstrahlbilder gegebenen Stand der Technik fur die Planetanumsprojektion, benötigt man immer noch einen Mechanismus zum Nachführen bewegter Bilder wie Mond- oder Planetenbilder. Wenn die Projektoren außerhalb des Zentrums sitzen, muß bei der Bewegung der Bilder über die Kuppel auch die Schärfe aufgrund des unterschiedlichen Abstands zur Kuppel immer nachgeführt werden. Laserprojektoren mit einem fast parallelen Lichtbündel zeigen diesen Nachteil nicht, jedoch liegt deren augenblickliches Einsatzgebiet, wie dargestellt, ausschließlich im Bereich der Vektorgraphik. Damit lassen sich aber Bilder von Planeten- oder Mondphasen überhaupt nicht darstellen.

Auspekt der Erfindung ist es, eine Vorrichtung zu schaffen, die bezüglich Projektionstechnik wesentlich einfacher im Aufbau als die bisherigen Planetarien ist, die weniger mechanische Einrichtungen verlangt und die trotzdem eine gegenüber der Vektorgraphik wesentlich erhöhte Bildqualität erlaubt.

Aspekte der Erfindung werden in Anspruch 1 offenbart.

Erfindungsgemäß wird also ein Laserprojektor eingesetzt, wie er seit 1970 schon aus der Fernsehtechnik bekannt ist. Die Entwicklung für die Kuppelprojektion, insbesondere bei Planetarien, hat bisher jedoch nicht zum Einsatz derartiger Projektoren geführt. Statt dessen ist die Entwicklung einen anderen Weg gegangen und man hat Laserprojektoren im Planetarium nur für Vektorgraphiken verwendet. Die früheren Entwicklungen hatten deswegen nicht zum Erfolg geführt, da angestrebt wurde, die gesamte Kuppel mit einer Rastereinrichtung zu beleuchten, was aber durch die dadurch bedingte geringe Auflösung zum Scheitern verurteilt war, vor allem, da man damals versuchte, den Sternenhimmel selbst mit Lasern darzustellen, was eine extrem hohe Auflösung für eine naturgetreue Abbildung erfordert.

Der aus der US 4 297 723 bekannte Laserprojektor ist nur zur Flugsimulation geeignet und es sind mit ihm nur Bilder in einem definierten Flächenbereich darstellbar. Von diesem unterscheidet sich die Erfindung dadurch, daß mehrere Projektoren mit eigener einzelner Ablenkeinrichtung für jede Lichtquelle vorgesehen sind, von denen jeder nur eine Teilfläche ausleuchtet. Dadurch ist eine wesentlich höhere Flexibilität für die Darstellung eines großen Bildinhalts durch Kombinationen mehrerer Projektoren gegeben. Durch eine Kombination mehrerer dieser Projektoren läßt sich im Prinzip sogar die ganze Kuppel mit Bildinhalt füllen, indem die Kuppel in Teilflächen aufgegliedert und jeder dieser Teilflächen ein eigener rastemder Laserprojektor zugeordnet wird. .

Damit ließe sich bei entsprechender Anzahl von Projektoren prinzipiell auch eine entsprechende gute Auflösung für die Abbildung des Sternenhimmels schaffen.

Demgegenüber wird der Aufwand aber weiter verringert, wenn man auf diese hohe Auflösung bei Laserprojektoren verzichtet und gemäß einer vorzugsweisen Weiterbildung der Erfindung einen Starball zur Projektion des Sternenhimmels vorsieht.

Ein Starball, wie er beispielsweise auch im Planetarium des "Forum der Technik" verwendet wird, besteht aus einer zentralen Projektionseinheit, bei der eine Vielzahl von Glasfasern für eine hohe Leuchtdichte in den zu projizierenden Sternscheibchen sorgt. Die rasternden Laserprojektoren können dann geringere Auflösung haben und einzig und allein dafür verwendet werden, zusätzlichen Bildinhalt in der Kuppel abzubilden Dazu zählt z.B. die Abbildung eines Panoramas, die Darstellung von Planeten, Monden mit ihren Bewegungen, Sonnenfinsternissen, Mondfinsternissen und ähnlichen Bildern.

Das Geometrieproblem mit überlappenden Bereichen wird dadurch gelöst, daß konzentrisch um den Starball und/oder in Peripherienahe die Rastereinrichtungen von mehreren, die Lichtquelle, die Rastereinrichtung und die Intensitätssteuerung aufweisenden Projektoren angeordnet sind, mit denen eine Vielzahl von mehreckigen Teilflächen ausleuchtbar sind, die an mindestens zwei Seiten durch Abschnitte von Großkreisen und/oder Parallelkreisen der Kuppel begrenzt sind. Damit lassen sich Teilflächen ausleuchten, wie sie beispielsweise von den Schalen einer Apfelsine beim Schälen jedermann bekannt sind.

Vier- oder dreieckige Teilflächen, die an mindestens zwei Seiten durch Abschnitte von Großkreisen und Parallelkreisen der Kuppel begrenzt sind, reichen aus, um beispielsweise Planetenbewegungen, Mondphasen oder ähnliche Dinge, die in begrenzten Flächenbereichen darstellbar sind, ohne Überlappungen der Teilflächen sichtbar zu machen. Insbesondere kann das Panorama einer Stadt im unteren Kuppelbereich mittels Teilflächen wiedergegeben werden, die durch Parallelkreise und Großkreise am Horizont eines Planetariums begrenzt sind.

Das angesprochene Problem der Überlappung wird gemäß einer vorteilhaften Weiterbildung der Erfindung dadurch gelöst, daß mehrere Teilflächen durch mehrere dieser Projektoren mit Rastereinrichtungen ausleuchtbar sind, daß mindestens ein Projektor von diesen mindestens eine Rastereinrichtung aufweist, mit der ein größeres Gebiet der Projektionsfläche ausleuchtbar ist als die durch diesen Projektor auszuleuchtende Teilfläche, und daß die Lichtquelle über die Intensitätssteuerung beim Rastern im größeren Gebiet außerhalb der auszuleuchtenden Teilfläche abschwächbar und insbesondere dunkeltastbar ist.

Gemäß dieser Weiterbildung der Erfindung wird das Uberlappungsproblem dadurch gelöst, daß die Rasterbereiche, die größer als die Teilflache sind, mit denen die Kuppel oder Teilkuppel flachendeckend überdeckt wird, dadurch begrenzt werden, daß der Rand dieser Teilflächen im Überlappungsbereich dunkelgetastet wird. Dadurch ergibt sich ein sauberer Anschluß verschiedener nebeneinander liegender, von Projektoren ausgeleuchteter Teilflächen. Damit Lücken nicht stören, ist es aber nach einer Justierung empfehlenswert, die Ränder nur abzuschwächen (Softedge-Prinzip), wobei die Summe der Lichtintensitäten im Randbereich aber der Lichtintensität im zentralen Bereich der Teilflächen angeglichen ist.

Bei einer anderen bevorzugten Weiterbildung der Erfindung ist vorgesehen, daß eine Lichtleitfaser zwischen Rastereinrichtung und Lichtquelle sowie eine Bewegungseinrichtung vorgesehen ist, mit der die Rastereinrichtung unabhängig von der Lichtquelle bewegbar ist.

Gemäß dieser Weiterbildung können Planetenprojektoren sehr einfach ausgeführt werden. Beim Stand der Technik mußte ein sehr schwerer Projektor präzise bewegt werden. Bei dieser Weiterbildung wird die wenig massebehaftete Rastereinrichtung von den übrigen Komponenten des Projektionssystems abgekoppelt. Diese läßt sich mit wesentlich geringerem Aufwand bewegen. Darüber hinaus werden die Probleme der Tiefenschärfe und Justierempfindlichkeit beseitigt. Die Weiterbildung vereinfacht so vor allen Dingen Planeten- und Mondprojektoren.

Jedoch ist diese Weiterbildung auch für die Ausbildung einer Kuppelprojektion mittels mehreren Projektoren zur Ausleuchtung aneinandergrenzenden Teilflächen vorteilhaft. Dort kann die Bewegungseinrichtung dafür eingesetzt werden, die beiden aneinandergrenzenden Teilflächen gegeneinander zu justieren, damit eine lückenlose Überlappung der Ausleuchtung der Kuppel möglich wird.

Gemäß einer anderen bevorzugten Weiterbildung der Erfindung ist die Bewegungseinrichtung für mindestens in zwei Richtungen unabhängige Bewegungen ausgelegt Damit lassen sich Planeten über die Kuppel fuhren Dazu reichen gemäß der bekannten Kugelkoordinaten zwei Winkelbewegungen aus.

Gemäß einer weiterführenden bevorzugten Weiterbildung ist vorgesehen, daß die Bewegungseinrichtung durch eine Steuereinrichtung für mindestens einen programmierten Bewegungsablauf des durch den mindestens einen Projektor ausgeleuchteten Teilbilds ansteuerbar ist. Bei der Programmierbarkeit macht man sich zunutze, daß die Planetenbewegung immer ähnlichen, parametrisierbaren Funktionsverläufen, die durch die Himmelsmechanik gegeben sind, folgt. Die Programmierbarkeit auf derartige Funktionen entlastet die Steuereinrichtung von Steuerungsprozessen für die Bewegung, indem nur Bahnparameter an die Bewegungseinrichtung übermittelt werden und diese dann die gewünschte Bewegung selbsttätig ablaufen läßt. Dann steht zusätzliche Rechenzeit, wenn die Steuereinrichtung ein Computer ist oder einen solchen enthält, beispielsweise zur Berechnung von Entzerrungen der darzustellenden Bilder, zur Verfügung.

Dementsprechend ist bei einer bevorzugten Weiterbildung der Erfindung vorgesehen, daß Bewegungen von Teilbildern auf der Projektionsfläche aufgrund der programmierten Bewegungsabläufe in Großkreisen oder für theoretisch berechnete Planetenbahnen ausführbar sind.

Wie vorher schon näher ausgeführt wurde, werden Laser als Lichtquellen bevorzugt. Diese senden üblicherweise Lichtbündel mit einer dominanten Wellenlänge aus. Das ist im allgemeinen unkritisch, wenn man für verschiedene Planeten die Wellenlänge gemäß der Farbe dieses Planeten wählt. Jedoch wird die Farbe zur Verringerung des Aufwands in einfacher Weise programmierbar, da man dann für verschiedene Planeten den gleichen Projektor verwenden kann, wenn die Lichtquelle des mindestens einen mit einer Rastereinrichtung ausgestatteten Projektors gemäß einer bevorzugten Weiterbildung der Erfindung für eine farbige Darstellung des Teilbilds zum Aussenden von einem Licht mit mindestens drei unterschiedlichen Wellenlängen enthaltenden Lichtbündel ansteuerbar ist.

Gemäß einer weiterführenden bevorzugten Weiterbildung der Erfindung ist die Lichtquelle zum Aussenden des Licht mit mindestens drei unterschiedlichen Wellenlängen enthaltenden Lichtbündels je einen Laser für jede dieser Wellenlängen aufweist, von denen jeder an eine Steuereinrichtung zur Intensitätssteuerung angeschlossen ist, mit der die Farbe des Lichtbündels für unterschiedliche Bildpunkte der Teilfläche steuerbar ist. Damit lassen sich auch farbige Bilder darstellen. Beispielsweise kann man den Planeten Erde detailliert mit Wasserflächen, Wolken und Landflächen als Großbild projizieren

Darüber hinaus besitzen die vorgenannten Vorrichtungen, auch gemäß den Weiterbildungen, für das Planetarium große Vorteile bezuglich des Platzbedarfes in der Kuppel. Mit den dargestellten Projektionen können alle drei der verschiedenen Arten von in einem Planetarium darzustellenden Bildinhalten abgebildet werden. Dies sind erstens Bildinhalte, die sich über die gesamte Kuppel erstrecken, zweitens solche die eine kreisförmige Zone überdecken, wie bei Panoramabildern, und drittens solche die eine kleine Fläche bis ungefähr 30 x 30 Winkelgrad überdecken, aber gesteuert an der Kuppel bewegbar sind. Insbesondere bei letzteren kann ein universeller Projektor fur die Darstellung von Sonne, Mond und Planeten vor dem Sternenhimmel eines Faseroptik- Starballs eingesetzt werden. Die nach dem Stand der Technik benötigten speziellen Projektoren nach Art der Diaprojektoren mit sämtlichen Mechanismen zur Darstellung der Phasen, dem Zoomoptik-Mechanismus und den Einrichtungen zur automatisch gesteuerten Fokussierung des Bildes entfallen durch einen leicht beweglichen Rasterkopf, der ausschließlich die Ablenkeinrichtung enthält und dem das Licht über eine Lichtleitfaser zugeführt wird. Das zu bewegende Projektorteil, der Rasterkopf, ist dann gegenüber den aus dem Stand der Technik bekannten Projektoren kleiner und flexibler. Die Darstellung ist umfangreicher und es läßt sich sogar eine höhere Bildqualität verwirklichen.

Die Erfindung wird nachfolgend anhand der Zeichnung beispielshalber noch näher erläutert. Es zeigen:
- Fig. 1:: Prinzip eines Laserprojektors, dargestellt bei einem Planetenprojektor.
- Fig. 2:: Schematische Darstellung der Anordnung von Projektoren relativ zu einem Starball in einem Planetarium.
- Fig. 3:: Anordnung von Rasterköpfen von Planetenprojektoren in der Nähe eines Starballs.
- Fig. 4: Schematische Darstellung für eine Ansteuerung der Projektoren.

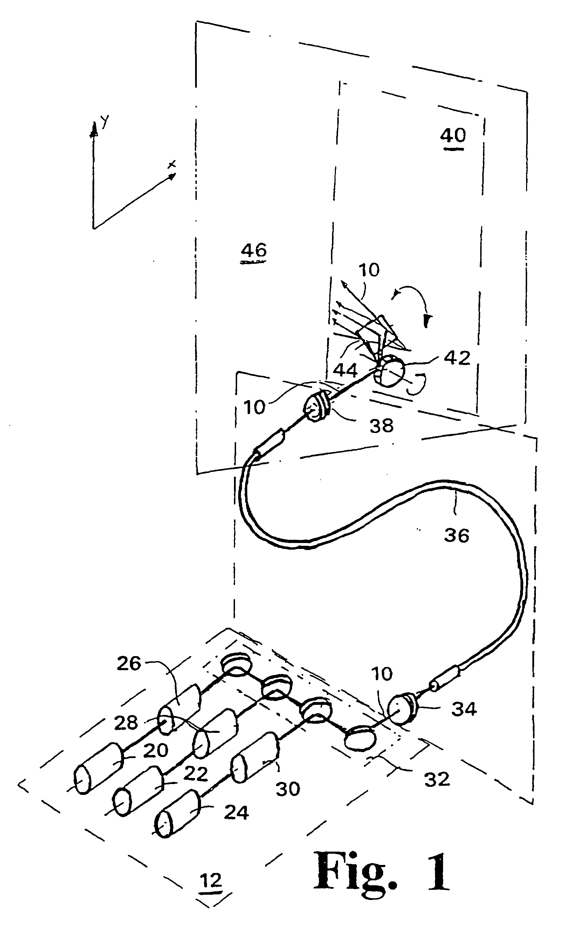

In Fig. 1 wird das Prinzip eines Projektors, der mit gerasterten Lichtbündeln arbeitet, naher erläutert. Ein Lichtbündel 10 wird dabei mit Hilfe einer Lichtquelle 12 erzeugt. Die Lichtquelle 12 enthält im Ausführungsbeispiel Gaslaser 20, 22, 24. Die hierfür verwendeten Laser 20, 22, 24 werden statisch betrieben und ihre Intensität wird mit Hilfe gesonderter Einrichtungen, wie im Ausführungsbeispiel den Modulatoren 26, 28, 30, gesteuert. Beim Einsatz von Halbleiterlasem erübrigt sich das getrennte Modulieren, da hier der Laserstrahl direkt über die zugeführte Leistung intensitätsmäßig schnell genug ansteuerbar ist.

Im Ausführungsbeispiel werden drei Laser 20, 22, 24 verwendet, die alle auf verschiedenen Wellenlängen zur Erzeugung eines roten, grünen und blauen Strahls zur Ausleuchtung eines Bildpunktes emittieren. Die Farbe eines Bildpunkts wird durch entsprechende Ansteuerung der Modulatoren 26,28, 30 gemischt. Mit Hilfe der Mischfarben können die Farben der Planeten naturgetreu abgebildet werden

Die drei vom Laser emittierten und anschließend modulierten Lichtbündel werden über ein Spiegelsystem 32 zu dem gemeinsamen Lichtbündel 10 zusammengeführt. Für dieses Spiegelsystem 32 werden dichroitische Spiegel verwendet. Gegenüber halbdurchlässigen Spiegeln, mit denen ebenfalls ein Zusammenführen in ähnlicher Weise wie in Fig. 1 gezeigt möglich ware, haben dichroitische Spiegel den Vorteil, daß die gesamte Intensität der von den Lasern erzeugten und anschließend modulierten Lichtbündel zur Beleuchtung von Bildpunkten zur Verfügung steht. Bei halbdurchlässigen Spiegeln müßte dagegen mit einem Leistungsverlust aufgrund Reflexion in ungeeignete Richtungen gerechnet werden.

Das Lichtbündel 10 wird anschließend über eine Einkoppeloptik 34 in eine Lichtleitfaser 36 eingekoppelt und nach Verlassen der Lichtleitfaser 36 mit eine Auskoppeloptik 38 wieder gebündelt. Dieses gebundelte Lichtbündel wird in eine Rastereinrichtung 40 gerichtet, in der zum Rastern im wesentlichen ein Polygonspiegel 42 und ein Schwenkspiegel 44 vorgesehen sind. Der rotierende Polygonspiegel 42 dient zur Zeilenablenkung in x-Richtung, der Schwenkspiegel 44 zu einer Bildablenkung in y-Richtung. Dadurch wird das Lichtbündel 10 in ähnlicher Weise über eine in Fig. 1 nicht dargestellte Projektionsfläche geführt, wie ein Elektronenstrahl bei der bekannten Fernsehrohre Die beim Rastern sequentiell beleuchteten Bildpunkte werden über die Modulatoren 26, 28, 30 farb- und intensitatsgesteuert, so daß in analoger Weise zum Fernsehen ein Bild entsteht.

Gegenüber herkömmlichen Projektoren zur Darstellung eines Bildes in einer Kuppel zeichnet sich das in Fig. 1 gezeigte Projektionssystem jedoch dadurch aus, daß auch bei unterschiedlichen Abständen zu unterschiedlichen Kuppelteilflächen eine Fokussierung nicht notwendig ist, da die Schärfe des Bildpunktes ausschließlich von der Parallelität des Laserstrahls abhängt.

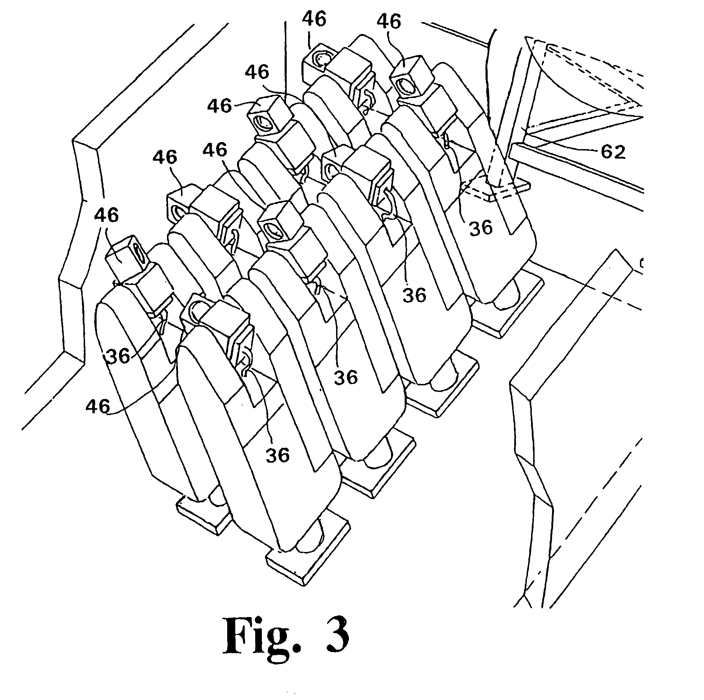

Die Lichtleitfaser 36 erweist sich bei Planetenprojektoren als vorteilhaft, also dann, wenn das Bild eines Planeten nicht statisch in einer Position gehalten wird, sondern auch über die Kuppeloberfläche geführt werden soll. Dazu ist das Ende der Lichtleitfaser mit der Auskoppeloptik 38 mit dem Eingang der Rastereinheit 40 starr verbunden. Die so entstehende Einheit wird zur Darstellung von Planetenbewegungen, wie später anhand Fig. 3 noch deutlicher wird, in zwei Richtungen geschwenkt. Da nur die starre Einheit, dieser Rasterkopf 46, unabhängig von der Lichtquelle 12 bewegt wird, ist ein wesentlich geringerer mechanischer Aufwand als beim Stand der Technik notig, bei dem ein schwerer Projektor bewegt werden mußte. Verzerrungen aufgrund unterschiedlicher Projektionsberflächenbereiche bei der Bewegung werden durch Modulation über die Modulatoren 26, 28, 30 mit unterschiedlichen Bildinhalten je nach Ort bzw. Winkelstellung des Rasterkopfes 46 ausgeglichen. Dazu ist eine später beschriebene Steuereinrichtung 64 vorgesehen, die sowohl die Bewegung des Rasterkopfes 46 als auch die Modulation über die Modulatoren 26, 28, 30 steuert.

Fur andere, ebenfalls im Planetarium einsetzbare Projektoren, beispielsweise zur Abbildung eines Panoramas, kann auf die Lichtleitfaser 36 verzichtet werden, da hier eine bewegliche Kopplung vom Rasterkopf zur Lichtquelle 12 nicht unbedingt erforderlich ist. Jedoch sollte bei derartigen Panoramaprojektoren auch eine Justiermoglichkeit bezüglich der ausgeleuchteten Teilflächen vorgesehen sein. Dafür bietet sich auch hier eine Entkopplung der Lichtquelle 12 vom Rasterkopf 46 durch eine Lichtletfaser 36 an, so daß zum Justieren nur der Rasterkopf 46 bewegt werden muß.

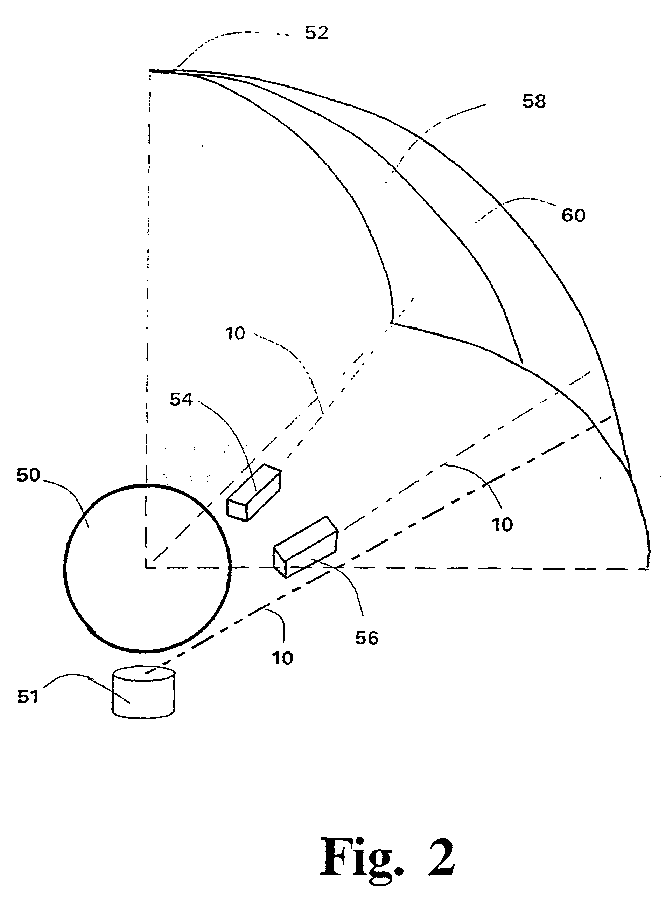

In Fig. 2 ist der Aufbau eines Planetariums schematisch gezeigt. Der Sternenhimmel wird mit Hilfe eines aus dem Stand der Technik bekannten Starballs 50 auf einer Kuppel 52 dargestellt. Mittels des Starballs 50 ist es möglich, den Sternenhimmel mit der erforderlichen hohen Auflösung und Intensität in die Kuppel zu projizieren.

Der Starball 50 ist im Planetarium von Fig. 2 zentrisch in der Kuppel angeordnet, so daß mit einer Drehung des Starballs 50 um sein Zentrum die unterschiedlichen Sternenhimmel bei unterschiedlichen Breitengraden und Jahreszeiten darstellbar sind, bzw. auch unterschiedliche Sternbilder für die nördliche und südliche Halbkugel sichtbar gemacht werden können.

Mit dem Bezugszeichen 51 wird in Fig. 2 ein Planetenprojektor bezeichnet, der ähnlich wie in Fig. 1 gezeigt, aufgebaut ist. Dieser Planetenprojektor 51 ist in der Nahe des Starballs angeordnet und gestattet es, Teilbilder von 30 x 30 Winkelgrad auf der Kuppel 52 abzubilden. Dieser Planetenprojektor 51 weist wieder einen beweglichen Rasterkopf 46 auf, der auch über eine Lichtleitfaser 36 von der Lichtquelle 12 getrennt ist, so daß diese projizierbare Fläche von 30x 30° über die Kuppel 52 bewegbar ist. Aufgrund dessen kann auch die Bewegung der dargestellten Planeten und ihre Position in jeder Jahreszeit im Planetarium dargestellt werden.

Weiter sind konzentrisch um den Starball 50 Panoramaprojektoren 54 und 56 angeordnet. Die mit den Bezugszeichen 54 und 56 schematisch dargestellten Projektoren sind in Fig. 2 nur beispielhaft wiedergegeben. Tatsächlich ist im Ausführungsbeispiel der gesamte Starball 50 konzentrisch in vorgegebenen Winkelschritten, speziell im Ausführungsbeispiel in gleichen Winkelschritten, mit diesen Projektoren umgeben. Allerdings sind die Größenverhältnisse in Fig. 2 zur besseren Veranschaulichung nicht exakt wiedergegeben. Im Ausführungsbeispiel befinden sich die Panoramaprojektoren wesentlich näher am Starball 50 und weiter von der Kuppel 52 entfernt als in Fig. 2 schematisch dargestellt ist.

Mit den Panoramaprojektoren 54 und 56 wird ein flächenmäßig begrenzter Bildinhalt in Teilflächen 58 und 60 wiedergegeben. Die Bildinhalte nebeneinander liegender Panoramaprojektoren 54 und 56 ergänzen sich dabei, so daß ein wesentlich größeres Gesamtbild mit verbesserter Auflösung auf der Kuppel 52 darstellbar ist, als wenn nur ein einzelner Projektor zur Darstellung des gesamten Panoramas vorgesehen wäre.

Mit diesen Panoramaprojektoren 54 und 56 kann z.B. die Silhouette einer Stadt projiziert werden. Weiter lassen sich aber mit Hilfe derartiger Projektoren auch andere Ereignisse im Weltall darstellen, beispielsweise ein Ankoppelmanöver von Raumschiffen. Gegenüber reiner Projektion eines Stadtpanoramas muß sich dann aber jede Teilfläche 58 und 60 in eine größere Höhe erstrecken.

Die Teilflächen, von denen zwei, 58 und 60, beispielhaft gezeigt sind, sind zur Segmentierung der Kuppel durch Großkreise oder durch Parallelkreise der Kuppel 52 abgegrenzt, so daß sich die Kuppel 52 mit derartigen Teilflachen 58 und 60 vollstandig fullen laßt.

Jedoch läßt sich die Begrenzung mit Großkreisen und Parallelkreisen bei dem Beispiel von Fig. 2 nur dann allein durch Steuerung des Rasterkopfs 46 durchführen, wenn sich die Panoramaprojektoren mit der Lichtablenkung des Rasterkopfes genau in der Mitte befinden. Dort steht aber aufgrund des Starballs 50 kein Raum zur Verfügung und die Panoramaprojektoren 54 und 56 sind außerhalb der Mitte angeordnet. Dann gibt es kleine Überlappungen in den Randbereichen der gerasterten Flächen. Diese Uberlappungsbereiche aufgrund der zu großen gerasterten Flächen werden vermieden, indem die Lichtintensität der Lichtbündel 10 mit Hilfe der Modulatoren 26, 28, 30 bei Überschreiten der Teilflächen 58 und 60 dunkelgetastet wird.

In Fig. 3 ist die Anordnung der Rasterköpfe 46 von Planetenprojektoren 51 in der Nähe eines Starballs 50 schematisch gezeigt. Das Bezugszeichen 62 ist einem Gestell zugeordnet, auf dem der Starball 50 drehbar in der Kuppel 52 angeordnet ist. Der Mittelpunkt des Starballs ist identisch mit dem Kuppelmittelpunkt, um den die Drehbewegung ausgeführt wird.

Die Rasterköpfe 46 sind, wie in Fig. 2 durch deren unterschiedliche Ausrichtung gezeigt ist, um zwei Winkel beweglich, so daß das Bild von jedem Planetenprojektor 51 auf verschiedene Orte der Kuppel projiziert werden kann. Die Kopplung zu den Lichtquellen 12 erfolgt auch hier wieder über die anhand von Fig. 1 näher beschriebene Lichtleitfaser 36.

Mit Hilfe der Rasterköpfe 46 können die einzelnen Planeten auf der Kuppel 52 gemäß den Gesetzen der Himmelsmechanik bewegt werden. Dafür sind in einem dazugehörigen Bewegungsmechanismus programmierte Abläufe vorgesehen, beispielsweise die Bewegung eines projizierten Bildes auf der Kuppel 52 in der Form von Epizykloiden.

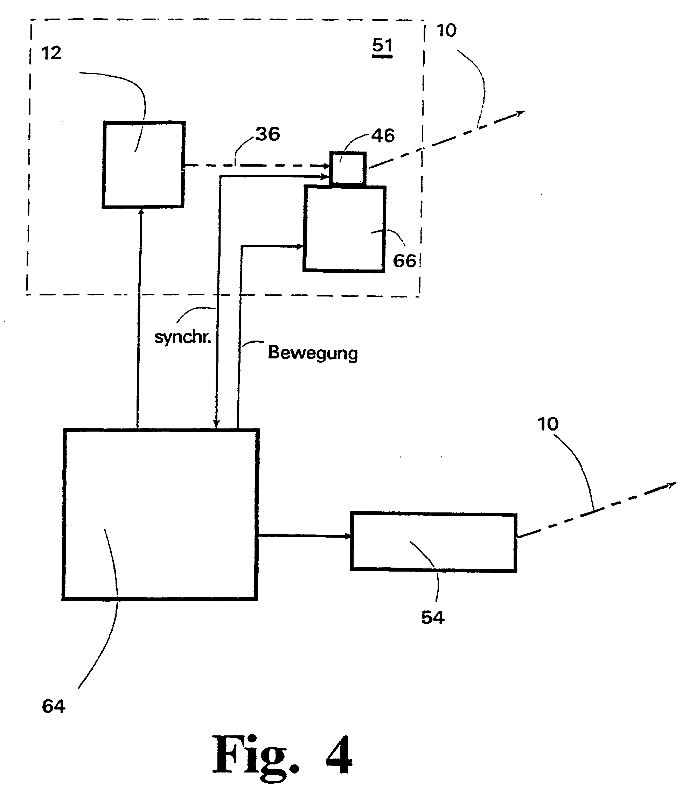

In Fig. 4 ist schematisch eine Steuereinrichtung 64 gezeigt, die alle Vorgänge im Planetarium steuert. Das Herz dieser Steuereinrichtung ist ein Computer, der die Planetenposition fur verschiedene Tage, Winkelgrade und ähnliche Parameter, die auf der Kuppel 52 dargestellt werden sollen, berechnet und danach den Bewegungsmechanismus 66 eines Panoramaprojektors 51 ansteuert. Der Bewegungsmechanismus 66 enthalt selbst einen Mikroprozessor, so daß auch vorprogrammierte Bewegungen gemäß der Himmelsmechanik ablaufen können. Dazu werden von der Steuereinrichtung 64 nur die Bahnparameter an den Bewegungsmechanismus 66 ubergeben, der dann mit Hilfe einer eigenen Mikroprozessorsteuerung das Bild eines Planeten auf seiner Bahn über die Planetariumskuppel führt.

Außerdem steuert die Steuereinrichtung 64 den Bildinhalt durch Modulation der Lichtquelle 12, deren Lichtbündel 10 über die Lichtleitfaser 36 zum Rasterkopf 46 geführt ist. Weiter steuert die Steuereinrichtung 64 auch die Bildinhalte von Kuppelprojektionen mit Hilfe mehrerer Panoramaprojektoren, von denen hier nur ein einzelner Panoramaprojektor 54 schematisch dargestellt ist.

Der Computer in der Steuereinrichtung 64 erzeugt nicht nur Bilder im Planetarium, sondern sorgt auch für eine entsprechende Entzerrung durch eine Verzerrung der Bilder, die einer Verzerrung der Bilder auf der Kuppel entgegenwirkt, welche beispielsweise dadurch verursacht ist, daß die Panoramaprojektoren 54, 56 und insbesondere ihre Rastereinrichtungen 40 nicht im Zentrum der Kuppel 52 angeordnet sind.

Weiter gibt die Steuereinrichtung 64 auch Signale ab, damit in den den Rasterköpfen 46 der Panoramaprojektoren 54 und 56 zugänglichen Flächenbereichen, welche die gewünschten Teilflächen 58 und 60 überschreiten, die zur Projektion eingesetzten Lichtbündel 10 dunkelgetastet werden.

## Patentansprüche

1. Vorrichtung zur Kuppelprojektion, mit mehreren Projektoren (50, 51, 54, 56) zur Darstellung von Bildinhalten auf einer zumindest teilkugelförmig ausgebildeten Projektionsfläche (52), wobei jeder Projektor (50, 51, 54, 56) so angeordnet ist, daß er mindestens eine Teilfläche (56, 58) der Projektionsfläche (52) mit Teilbildern ausleuchtet und wobei mindestens für einen der Projektoren (51, 54, 56) eine Lichtquelle (12) und eine Ablenkeinrichtung (40) vorgesehene sind, mit der ein aus der Lichtquelle (12) emittiertes Lichtbündel (10) zur Darstellung des Bildinlialts über den auszuleuchtenden Teil führbar ist,
wobei die Ablenkeinrichtung (40) des mindestens einen Projektors (51, 54, 56) als Rastereinrichtung ausgebildet ist, mit der das Lichtbündel (10) in mehreren Zeilen mit mehreren Bildpunkten über die auszuleuchtende Teilfläche (56, 58) führbar und die Lichtquelle (12) an eine Intensitätssteuerung (64) angeschlossen ist, aufgrund der einzelne Bildpunkte zur Darstellung des Teilbildes (56, 58) mit geeigneter Leuchtdichte ausleuchtbar sind, **dadurch gekennzeichnet, dass** einer der Projektoren zentral in der Kuppel angeordnet und als Starball (50) zur Projektion des Sternenhimmels ausgebildet ist.

2. Vorrichtung nach Anspruch 1, **dadurch gekennzeichnet, daß** konzentrisch um den Starball (50) und/oder in dessen Periphenenähe die Rastereinrichtungen (40) von mehreren Projektoren (54, 56), die Lichtquelle (12), Rastereinrichtung (40) und Intensitätssteuerung aufweisenden, angeordnet sind, wobei mit dem mehreren Projektoren eine Vielzahl von mehreckigen Teilflächen ausleuchtbar sind, die an mindestens zwei Seiten durch Abschnitte von Großkreisen und/oder Parallelkreisen der Kuppel (52) begrenzt sind.

3. Vorrichtung nach einem der obigen Ansprüche, **dadurch gekennzeichnet, daß** mehrere Teilflächen (58, 56) durch mehrere der eine Rastereinrichtung aufweisende Projektoren (54, 56) ausleuchtbar sind daß mindestens ein Projektor (54, 56) von diesen mittels seiner Rastereinrichtung (40) ein größeres Gebiet der Projektionsfläche ausleuchen kann als die durch diesen Projektor (54, 56) auszuleuchtende Teilfläche (58, 60), und daß die Lichtquelle (12) über die Intensitätssteuerung (64) beim Rastern im größeren Gebiet außerhalb der auszuleuchtenden Teilfläche (58, 60) dunkeltastbar ist.

4. Vorrichtung nach einem der obigen Ansprüche, **dadurch gekennzeichnet, daß** eine Lichtleitfaser (36) zwischen Rastereinrichtung (40) und Lichtquelle (12) sowie eine Bewegungseinrichtung (66) vorgesehen ist, mit der die Rastereinrichtung (40) unabhängig von der Lichtquelle (12) bewegbar ist.

5. Vorrichtung nach Anspruch 4, **dadurch gekennzeichnet, daß** die Bewegungseinrichtung (66) für mindestens in zwei Richtungen unabhängige Kippbewegungen ausgelegt ist.

6. Vorrichtung nach Anspruch 4 oder 5, **dadurch gekennzeichnet, daß** die Bewegungseinrichtung (66) durch eine Steuereinrichtung (64) für mindestens einen programmierten Bewegungsablauf des durch den mindestens einen Projektor (51) ausgeleuchteten Teilbilds ansteuerbar ist.

7. Vorrichtung nach Anspruch 6, **dadurch gekennzeichnet, daß** Bewegungen von Teilbildern (58, 60) auf der Projektionsfläche (52) aufgrund der programmierten Bewegungsabläufe in Großkreisen oder für theoretisch berechnete Planetenbahnen ausführbar sind.

8. Vorrichtung nach einem der obigen Ansprüche, **dadurch gekennzeichnet, daß** die Lichtquelle (12) des mindestens einen mit einer Rastereinrichtung (40) ausgestatteten Projektors (51, 54, 56) für eine farbige Darstellung des Teilbildes (58, 60) zum Aussenden von einem Licht mit mindestens drei unterschiedliche Wellenlängen enthaltenden Lichtbündel (10) ansteuerbar ist.

9. Vorrichtung nach Anspruch 8, **dadurch gekennzeichnet, daß** die Lichtquelle (12) zum Aussenden des Licht mit mindestens drei unterschiedlichen Wellenlängen enthaltenden Lichtbündels (10) je einen Laser (20, 22, 24) für jede dieser Wellenlängen aufweist, von denen jeder an eine Steuereinrichtung (64) zur Intensitätssteuerung angeschlossen ist, mit der die Farbe des Lichtbündels (10) für unterschiedliche Bildpunkte der Teilflächen (58, 60) steuerbar ist.

## Claims

1. Device for projection on a dome with a plurality of projectors (50, 51, 54, 56) for displaying image contents on an at least partially spherical projection surface (52), wherein every projector (50, 51, 54, 56) is arranged in such a way that it illuminates at least one partial surface (56, 58) of the projection surface (52) with partial images, and wherein there are provided for at least one of the projectors (51, 54, 56) a light source (12) and a deflecting device (40) by which a light bundle (10) emitted from the light source (12) can be guided along the portion to be illuminated in order to display the image content, wherein the deflecting device (40) of the at least one projector (51, 54, 56) is constructed as a scanning device by which the light bundle (10) can be guided in a plurality of lines with a plurality of picture points over the partial surface (56, 58) to be illuminated, and the light source (12) is connected to an intensity control (64) on the basis of which individual picture points can be illuminated for displaying the partial image (56, 58) with suitable luminous density, **characterised in that** one of the projectors is located in the centre of the dome and is provided as a starball (50) for projecting the starry sky.

2. Device according to claim 1, **characterised in that** the scanning devices (40) of a plurality of projectors (54, 56) having the light source (12), the scanning device (40) and the intensity control are arranged concentrically around the starball (50) and/or in the vicinity of its periphery, wherein a plurality of polygonal partial surfaces can be illuminated by the plurality of projectors, these polygonal surfaces being bordered on at least two sides by segments of large circles and/or parallel circles of the dome (52).

3. Device according to one of the above claims, **characterised in that** a plurality of partial surfaces (58, 56) can be illuminated by a plurality of the projectors (54, 56) comprising a scanning device (40), **in that** at least one projector (54, 56) can illuminate, by means of its scanning device (40), a region of the projection surface which is larger than the partial surface (58, 60) to be illuminated by this projector (54, 56), and **in that** the light source (12) can be blanked by means of the intensity control (64) when scanning in the larger region outside of the partial surface (58, 60) to be illuminated.

4. Device according to one of the above claims, **characterised in that** a light-conducting fiber (36) is provided between the scanning device (40) and the light source (12) and a movement device (66) is provided by which the scanning device (40) is movable independently from the light source (12).

5. Device according to claim 4, **characterised in that** the movement device (66) is equipped for tilting movements independent in at least two directions.

6. Device according to one of claims 4 or 5, **characterised in that** the movement device (66) is controllable by means of a control device (64) for at least one programmed movement sequence of the partial image illuminated by the at least one projector (51).

7. Device according to claim 6, **characterised in that** movements of partial images (58, 60) on the projection surface (52) can be carried out on the basis of programmed movement sequences in large circles or for theoretically calculated planetary orbits.

8. Device according to one of the above claims, **characterised in that** the light source (12) of the at least one projector (51, 54, 56) outfitted with a scanning device (40) is controllable for a color display of the partial image (58, 60) for emitting a light bundle (10) containing light with at least three different wavelengths.

9. Device according to claim 8, **characterised in that** the light source (12) for emitting the light bundle (10) containing light with at least three different wavelengths has a laser (20, 22, 24) for each of these wavelengths, each laser (20, 22, 24) being connected to a control device (64) for controlling intensity, by means of which the color of the light bundle (10) can be controlled for different image points of the partial surface (58, 60).

## Revendications

1. Dispositif pour la projection sur coupole, comportant plusieurs projecteurs (50, 51, 54, 56) pour la représentation de contenus d'images sur une surface de projection (52) réalisée au moins en forme de sphère partielle, dans lequel chaque projecteur (50, 51, 54, 56) est disposé de manière à éclairer au moins une surface partielle ((56, 58) de la surface de projection (52) avec des images partielles, et dans lequel au moins pour l'un des projecteurs (51, 54, 56) sont prévues une source lumineuse (12) et un dispositif de déflexion (30) au moyen duquel un faisceau de lumière (10), émis par la source lumineuse (12), peut être guidé sur la partie à éclairer pour représenter le contenu d'image, dans lequel le dispositif de déflexion (40) du au moins un projecteur (51, 54, 56) est réalisé comme dispositif de tramage au moyen duquel le faisceau de lumière (10) peut être guidé sur la surface partielle (56, 58) à éclairer, en plusieurs lignes avec plusieurs points d'image, et la source lumineuse (12) est raccordée à une commande d'intensité (64) sur la base de laquelle certains points d'image peuvent être éclairés pour représenter l'image partielle (56, 58) avec la luminance appropriée, **caractérisé en ce que** l'un des projecteurs est disposé au centre de la coupole et est réalisé comme starball (50) pour la projection du ciel étoilé.

2. Dispositif selon la revendication 1, **caractérisé en ce que** sont disposés concentriquement autour du starball (50) et/ou à proximité de sa périphérie, les dispositifs de tramage (40) de plusieurs projecteurs (50, 54, 56) qui comportent le dispositif de tramage (40) et la commande d'intensité, plusieurs projecteurs permettant d'éclairer un grand nombre de surfaces partielles polygonales qui sont délimitées sur au moins deux côtés par des parties de grands cercles et/ou de cercles parallèles de la coupole (52).

3. Dispositif selon l'une des revendications précédentes, **caractérisé en ce que** plusieurs surfaces partielles (58, 56) peuvent être éclairées par plusieurs projecteurs (54, 56) comportant un dispositif de tramage, **en ce qu'**au moins un projecteur (54, 56) peut éclairer, au moyen de son dispositif de tramage (40), une plus grande zone de la surface de projection que la surface partielle (58, 54) à éclairer au moyen de ce projecteur (54, 56), et **en ce que** la source lumineuse (12) peut être obscurcie par la commande d'intensité 64 lors du balayage dans la plus grande zone située à l'extérieur de la surface partielle (58, 60) à éclairer.

4. Dispositif selon l'une des revendications précédentes, **caractérisé en ce qu'**il est prévu une fibre optique (36) entre le dispositif de tramage (40) et la source lumineuse (12), ainsi qu'un dispositif de déplacement (66) au moyen duquel le dispositif de tramage (40) est déplaçable indépendamment de la source lumineuse (12).

5. Dispositif selon la revendication 4, **caractérisé en ce que** le dispositif de déplacement (66) est conçu pour des mouvements de basculement au moins dans deux directions.

6. Dispositif selon la revendication 4 ou 5, **caractérisé en ce que** le dispositif de déplacement (66) peut être commandé par un dispositif de commande (64) pour au moins une séquence de mouvements programmés de l'image partielle éclairée par le ou les projecteurs (51).

7. Dispositif selon la revendication 6, **caractérisé en ce que** des mouvements d'images partielles (58, 60) sur la surface de projection (52) peuvent être exécutés sur la base des séquences de mouvements programmés, dans de grands cercles ou pour des orbites planétaires calculées en théorie.

8. Dispositif selon l'une des revendications précédentes, **caractérisé en ce que** la source lumineuse (12) du ou des projecteurs (51, 54, 56) équipés d'un dispositif de tramage (40) peut être commandée pour une représentation en couleurs de l'image partielle (58, 60) afin d'émettre un faisceau lumineux (10) contenant de la lumière avec au moins trois longueurs d'onde différentes.

9. Dispositif selon la revendication 8, **caractérisé en ce que** la source lumineuse (12) destinée à émettre le faisceau lumineux (10) contenant de la lumière avec au moins trois longueurs d'onde différentes, comporte un laser (20, 22, 24) pour chacune de ces longueurs d'onde dont chacun est raccordé à un dispositif de commande (64) pour la commande de l'intensité, au moyen duquel la couleur du faisceau lumineux (10) peut être commandée pour différents points d'image des surfaces partielles (58, 60).
